# EUROPEAN PATENT APPLICATION

(11) **EP 4 726 062 A1**
(43) Date of publication of application: **15.04.2026**
(21) Application number: 24205170.4
(22) Date of filing: 08.10.2024
(51) Int. Cl.: C22B 3/44, C22B 7/00, C22B 3/00, C22B 47/00, H01M 10/54

(54) **SELECTIVE RECOVERY OF NICKEL AND COBALT FROM NICKEL-COBALT-MANGANESE MATERIALS**

(71) Applicant: Umicore, 1000 Brussels (BE)
(72) Inventor: VERHEES, Pieter, 2100 Antwerpen (BE); VEREYCKEN, Willem, 2250 Olen (BE); SCHOUTERDEN, Sam, 3500 Hasselt (BE); GOMMERS, Koen, 3012 Wilsele (BE)
(74) Representative: Umicore RDI Patent Department

(57) **Abstract**

the present invention provides a process for selective recovery of nickel and cobalt from nickel-cobalt-manganese materials, comprising the steps of:
i. contacting said material with a sulphuric acid solution at a pH of at most 1 and at elevated temperature in absence of a reducing agent;
ii. adding a reducing agent to the reaction mixture obtained in step i. and maintaining the resulting mixture at a pH of at most 1 and at elevated temperature; and
iii. separating the manganese rich solid phase from the nickel and cobalt rich liquid phase.

## Description

### TECHNICAL FIELD

The present invention relates to processes for selectively recovering nickel and cobalt from a feedstock material using hydrometallurgical processes.

### INTRODUCTION

Nickel is an important industrial metal which finds primarily applications in stainless steel production, nonferrous corrosion-resistant alloys, electroplating, alloy steel and battery materials. High purity nickel is essential for developing different applications. Nickel having a purity above 98% can be obtained from refining nickel ore resources such as nickel sulphide ore and nickel hydroxide intermediates. Often, these ores and intermediates also comprise an amount of iron and manganese. Also, cobalt is an important industrial metal with uses primarily in alloys, battery materials, catalyst materials and pigments.

As the availability of high purity nickel resources is decreasing, new processes and refineries for purifying nickel containing materials are required. Likewise, sourcing of cobalt is constrained by limited natural occurrence and availability primarily in politically unstable regions. Such nickel and cobalt refineries will need to allow for high capacities and high efficiency of the processes to yield elemental nickel and/or cobalt, or a nickel and/or cobalt compound in a desired quantity and high purity at low cost. It's key to separate less valuable metals like iron and manganese in the most efficient way.

EP 3 550 039 A1 explores processes for the recovery of transition metals from lithium-free mixed oxides, hydroxides or oxyhydroxides containing nickel and manganese, comprising the subsequent steps of (a) slurrying at least one of said mixed oxides, hydroxides or oxyhydroxides in water, (b) treating said slurry with sulfuric acid at a pH value below 2.5, and (c) reacting the resultant mixture with a peroxide. However, no selective leaching of nickel and cobalt is reported.

US 2024/0183005 A1 reports a method for dissolving a positive electrode material of a battery including a step during which the positive electrode material, comprising lithium and optionally cobalt and/or nickel, is submerged in an acid solution having a pH between 0 and 4, the acid solution containing either manganese ions or hydrogen peroxide, by means of which the lithium and optionally the cobalt and/or nickel is dissolved, and the manganese ions are selectively precipitated in the form of manganese oxyhydroxide.

CN 116 694 931 A reports a method for reduction leaching adopted to replace sulfuric acid direct leaching, so that the direct recovery rate of nickel, cobalt and scandium is greatly improved; NH₄F is used as a calcium and magnesium removal reagent; the third filtrate with calcium and magnesium removed is flocculated to remove silicon, the silicon content of the third filtrate can be reduced, the problem of an intermediate phase in the subsequent extraction process is solved, meanwhile, the polyferric sulphate silicon removal method is easy to operate, stable in index and low in price, and new impurities cannot be brought into a system; the Zn removal depth can reach below 1 mg/L by adopting hydrogen sulphide to precipitate zinc, and the nickel content of the slag is low due to precipitation under an acidic condition.

Yet, the inventors identified further needs for improved methods for selectively recovering nickel and cobalt from a feedstock comprising nickel cobalt and manganese. Such methods are preferably very efficient in terms of recovery of target metals, i.e. nickel and cobalt, have very high selectivity for nickel and cobalt over manganese, allow the use of different feedstocks, and are economically viable and environmentally benign. Furthermore, new methods should allow to be easily upscaled industrially and should allow for good process control and process safety.

### SUMMARY OF THE INVENTION

The current invention provides a solution for at least one of the above mentioned problems by providing a process for selective recovery of nickel and cobalt from nickel-cobalt-manganese materials, as described in claim 1. The process allows careful control over the dissolution of nickel, cobalt and manganese to selectively dissolve nickel and cobalt while limiting manganese dissolution through pH and temperature control, and through control of the oxidation states of the metals through absence of a reducing agent. By reducing the undissolved of cobalt(III) remaining in the solid phase in step ii., recovery yields are further maximized while avoiding manganese dissolution. The process is flexible in terms of feedstock which can be employed, and can easily be upscaled industrially.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints. All percentages are to be understood as percentage by weight, abbreviated as "wt.%" or as volume per cent, abbreviated as "vol.%", unless otherwise defined or unless a different meaning is obvious to the person skilled in the art from its use and in the context wherein it is used.

In the context of the present invention, the term "raw material feed" refers to one or more feedstocks that comprises any one or a combination of nickel, cobalt, manganese, or lithium. In some embodiments, said raw material feed may comprise any one or combination of raw materials and recycled materials. Examples of raw materials include, but are not limited to, mixed hydroxide precipitates (MHP), mixed sulphide precipitates (MSP), nickel sulphide concentrate, cobalt sulphide concentrate, nickel laterite, nickel matte, or ferronickel. Examples of recycled materials include, but are not limited to, spent cathode material, and material derived from recycled lithium ion batteries or lithium ion battery manufacturing scrap (collectively, referred to herein as black mass).

In the context of the present invention, the term "MHP" is to be considered as an abbreviation of the term "mixed hydroxide precipitate." Mixed hydroxide precipitate (MHP) is an intermediate product of nickel metallurgy derived from processing laterite ores which contains primarily nickel and a minor amount of cobalt. MHP is a solid product which is typically prepared by extracting nickel and cobalt from laterite ores. Alternatively or additionally, MHP may be obtained from nickel and/or cobalt containing hydroxide materials produced as production waste during preparation of cathode materials or obtained from battery recycling processes.

In the context of the present invention, the term "CHIP" is to be considered as an abbreviation of the term "cobalt hydroxide intermediate precipitate." Cobalt hydroxide intermediate is comprised primarily of cobalt, and typically has a cobalt content of 25 wt.% to 40 wt.%, relative to the total weight of said intermediate product. Typically, said CHIP comprises a significant amount of nickel. CHIP's are known to have a very low amount of impurities, which render them attractive for processes according to the present invention.

In the context of the present invention, the term "solid metal-containing feed," specifically said solid metal-containing feed which is fed to the process in step iv., refers to a solid feed comprising an MHP product, a CHIP product, or a mixture of two or more MHP products, two or more CHP products, or a mixture of one or more MHP products and one or more CHIP products. Preferably, said metal-containing feed comprises at least one Ni compound and/or at least one Co compound. Preferably, said Ni compound and said Co compound are comprised as a Ni (II) compound and as a Co (II) compound, respectively. Yet, said Ni compound and said Co compound may also be comprised in higher oxidation states such as 3+, or said metal-containing feed may comprise a mixture of Ni and/or Co compounds in oxidation state 2+ and in oxidation state 3+.

In a first aspect, the present invention provides a process for leaching of nickel and cobalt from a feed material comprising nickel, cobalt and manganese, comprising the steps of:
i. contacting said material with a sulphuric acid solution at a pH of at most 2 and at elevated temperature in absence of a reducing agent;
ii. adding a reducing agent to the reaction mixture obtained in step i. and maintaining the resulting mixture at a pH of at most 2 and at elevated temperature; and
iii. separating the manganese rich solid phase from the nickel and cobalt rich liquid phase.

In one embodiment, said nickel, cobalt and manganese are comprised in said feed materials as compound materials, such as oxides, hydroxides, and/or oxyhydroxides. The feed material may contain nickel, cobalt, and manganese in oxidation states of Ni(II), Co(III), and Mn(IV), respectively.

In one embodiment, the present invention provides a process according to the first aspect of the invention, wherein the free acid concentration during leaching step i. is maintained at about 10 to 1000 g/L H₂SO₄, or at about 25 to 500 g/L H₂SO₄, or at about 30 to 500 g/L H₂SO₄, or at about 50 to 200 g/L H₂SO₄, or of about 60 to 100 g/L H₂SO₄.

The pH during leaching step i. may be maintained at a value below 1.5, or even below 1.0 or at a value between 0 and 1, such as a value of about 0.5. At sufficiently low pH the concentration of manganese in the liquid phase is significantly suppressed due to the formation of insoluble manganese compounds. Nickel and cobalt dissolve into the liquid phase under these conditions.

The temperature during leaching step i. may be higher than 50°C, or even higher 60°C, or even higher than 70°C. In a special embodiment, said temperature is between 75°C and 95°C, or even between 80°C and 90°C. It was found that higher temperatures not only improve reaction kinetics for the dissolution of nickel and cobalt, but also improved selectivity as dissolution of nickel and cobalt is facilitated while manganese remains predominantly in the solid phase. Preferably, leaching step i. is performed under standard atmospheric conditions.

Leaching step i. consisting of contacting the feed material with sulphuric acid is typically performed under stirring for a period of at least 15 minutes and for a period of not more than 8 hours, or for a period of 0.25 to 4 hours, or for a period of 0.25 to 2 hours, such as for a period of 30 minutes, 45 minutes or 1 hour, or any time duration there in between.

Leaching step i. is performed in absence of a reducing agent to avoid the reduction of Mn(IV), which is the less soluble form of manganese under the acidic conditions.

In the second step of the inventive process, cobalt which may still be present in the solid phase of the slurry is reduced from Co(III) to Co(II). Co(II) is more soluble in the acidic solution. This enhances the dissolution of residual cobalt without significantly increasing manganese dissolution. To this aim, a reducing agent is added after the initial leaching step i. Suitable reducing agents may be hydrogen peroxide (H₂O₂), sulphur dioxide (SO₂), metallic nickel, metallic cobalt, or metallic iron. Sulphur dioxide may be industrially preferred due to its effectiveness and ease of handling.

In one embodiment, the present invention provides a process according to the first aspect of the invention, wherein said reducing agent is added in step ii. Said reducing agent may be added in a stoichiometric ratio of at least 1 and not more than 5 times, or of at least 1 and not more than 3 times, the amount of cobalt remaining in the solid phase prior to addition of said reducing agent. Adding at least the stoichiometric equivalent amount of reducing agent, relative to the amount of cobalt remaining in the solid phase, is important to achieve sufficient cobalt recovery, while avoiding too high amounts of reducing agent is important to avoid dissolution of manganese in the liquid phase. The inventors found that gradual or incremental addition of reducing agent allows for better control of the reduction reaction, and minimizes the risk of over-reduction, and dissolution, of manganese.

The pH during reduction step ii. may be maintained at a value below 1.5, or even below 1.0 or at a value between 0 and 1, such as a value of about 0.5. A sufficiently low pH the dissolution of manganese in the liquid phase is significantly suppressed due to the formation of insoluble manganese compounds. Nickel and cobalt dissolve into the liquid phase under these conditions.

The temperature during reduction step ii. may be higher than 50°C, or even higher 60°C, or even higher than 70°C. In a special embodiment, said temperature is between 75°C and 95°C, or even between 80°C and 90°C. Preferably, reduction step ii. is performed under standard atmospheric conditions.

Reduction step ii. is typically performed under stirring for a period of at least 15 minutes and for a period of not more than 8 hours, or for a period of 0.25 to 4 hours, or for a period of 0.25 to 2 hours, such as for a period of 30 minutes, 45 minutes or 1 hour, or any time duration there in between.

In one embodiment, the present invention provides a process according to the first aspect of the invention, wherein the pH in step i. and ii. is maintained at a value of about 0.5.

In one embodiment, the present invention provides a process according to the first aspect of the invention, wherein a mixed hydroxide precipitate (MHP) and/or a cobalt hydroxide intermediate product (CHIP) is added to the reaction mixture obtained in step ii. Addition of MHP and/or CHIP to the reaction slurry allows to increase further the content of nickel and cobalt, upon dissolution, in the liquid phase while neutralizing the sulphuric acid in the slurry. MHP and/or CHIP may be added to the reaction slurry in a stoichiometric amount relative to the amount of sulphuric acid in the slurry. Manganese hydroxides which is introduced via said MHP or CHIP into the reaction slurry is present in the form of insoluble hydroxides and may be filtered off. Addition of MHP or CHIP may be performed prior to the separation step iii. to allow the manganese hydroxides to be separated from the liquid phase in separation step iii.

In one specific embodiment, the present invention provides a process according to the first aspect of the invention, wherein said mixed hydroxide precipitate is added in a stoichiometric amount, relative to the amount of free sulphuric acid in the reaction mixture obtained in step ii. or in lower amounts.

In one specific embodiment, the present invention provides a process according to the first aspect of the invention, wherein the feed material contains nickel, cobalt, and manganese in oxidation states of Ni(II), Co(II), Co(III), Mn(II) and Mn(IV), respectively.

### EXAMPLES

The following examples are intended to further clarify the present invention, and are nowhere intended to limit the scope of the present invention.

### EXAMPLE 1

90 kg of a nickel-manganese-cobalt (NMC) feed material powder having a Ni:Mn:Co ratio of about 2:1:1 (29% Ni, 15% Co, 17% Mn, 4.2% Li) is charged in a reactor with 350 L demineralized water to form a slurry. Sulphuric acid is then added to the slurry until the pH drops to 0.5, corresponding to a free acid concentration of about 100 g sulphuric acid per L. The slurry was stirred at a temperature of about 80°C in absence of a reducing agent for a period of about 2 hours. Yields and the composition of the liquid phase is depicted in Table 1.

**Table 1. Leaching yield and composition of the liquid phase after leaching in sulphuric acid at pH 1 for 2 hours at 80°C.**

| | Yield (%) | Composition (g/L) |
|---|---|---|
| - Ni | 67.6 | 40 |
| - Mn | 3.3 | 1.5 |
| - Co | 39.7 | 12 |
| - Li | 94 | 9.6 |

Subsequently, hydrogen peroxide was admitted to the reactor in an amount of 1.2 times the amount of cobalt remaining in the solid phase and the mixture was stirred for about 30 minutes at a pH of about 0.5 and a temperature of about 80°C. Yields and the composition of the liquid phase is depicted in Table 2.

**Table 2. Recovery yield and composition of the liquid phase after reduction with peroxide and after allowing the Co-Mn exchange to come to equilibrium.**

| | Yield (%) | Composition (g/L) |
|---|---|---|
| - Ni | 99 | 53 |
| - Mn | 27 | 7.8 |
| - Co | 98 | 26 |
| - Li | 99 | 7.4 |

Finally, the solid phase was filtered off. Analysis of the filtrate and of the solid residue showed that nickel and cobalt were recovered in yields of more than 98%, whereas more than 70% of manganese remained in the solid phase.

### EXAMPLE 2

The procedure of Example 1 was repeated whereby a mixed hydroxide precipitate (MHP) feed material is added to the reaction slurry after reduction with hydrogen peroxide and before filtration. MHP was added in an amount sufficient to neutralize the free sulphuric acid in the slurry. The slurry is then stirred for another 30 minutes at 80 °C, and then filtered off. Selective recovery of cobalt and nickel in the filtrate is obtained while manganese remains predominantly in the solid residue. Composition of the residue before and after MHP addition is depicted in Table 3.

**Table 3. Composition of the residue before and after MHP addition.**

| | Residue before MHP addition | Residue after MHP addition * |
|---|---|---|
| Weight (g) | 50.2 | 68.7 |
| Co (%) | 1.4 | 2.85 |
| Ni (%) | 0.15 | 0.24 |
| Mn (%) | 56 | 54 |

| | | |
|---|---|---|
| * Calculated weight and composition based on the weight and composition of two separate cakes. | | |

## Claims

1. Process for leaching of nickel and cobalt from a feed material comprising nickel, cobalt and manganese, comprising the steps of:
i. contacting said material with a sulphuric acid solution at a pH of at most 1 and at elevated temperature in absence of a reducing agent;
ii. adding a reducing agent to the reaction mixture obtained in step i. and maintaining the resulting mixture at a pH of at most 1 and at elevated temperature; and
iii. separating the manganese rich solid phase from the nickel and cobalt rich liquid phase.

2. Process according to claim 1, wherein the free acid concentration during leaching step i. is maintained at about 60 to 100 g/L H₂SO₄.

3. Process according to claim 1 or 2, wherein the temperature during leaching step i. is maintained at a temperature between 75 and 95°C.

4. Process according to any of claims 1 to 3, wherein the temperature during reduction step ii. is maintained at a temperature between 75 and 95°C.

5. Process according to any of claims 1 to 4, wherein the pH in step i. and ii. is maintained at a value of about 0.5.

6. Process according to any of claims 1 to 5, wherein said reducing agent is added in step ii. in a stoichiometric ratio of at least 1 and not more than 5 times the amount of cobalt remaining in the solid phase prior to addition of said reducing agent.

7. Process according to any of claims 1 to 5, wherein a mixed hydroxide precipitate is added to the reaction mixture obtained in step ii.

8. Process according to claim 7, wherein said mixed hydroxide precipitate is added in a stoichiometric amount, relative to the amount of free sulphuric acid in the reaction mixture obtained in step ii.

9. Process according to any of claims 1 to 8, wherein said material is contacted with sulphuric acid in step i. for a period of at least 15 minutes.

10. Process according to any of claims 1 to 9, wherein the reaction mixture obtained in step i. is contacted with said reducing agent in step ii. for a period of at least 15 minutes.

11. Process according to any of claims 1 to 10, wherein the reducing agent is added incrementally in step ii.

12. Process according to any of claims 1 to 11, wherein said reducing agent is hydrogen peroxide, sulphur dioxide and/or metallic nickel, metallic cobalt or metallic iron.

13. Process according to any of claims 1 to 12, wherein the feed material is a battery material comprising nickel, cobalt, and manganese oxides.

14. Process according to any of claims 1 to 13, wherein the feed material is a mixed hydroxide precipitate (MHP), a cobalt hydroxide intermediate product (CHIP), battery production scrap or battery recycling intermediate products.

15. Process according to any of claims 1 to 14, wherein the feed material contains nickel, cobalt, and manganese in oxidation states of Ni(II), Co(II), Co(III), Mn(II) and Mn(IV), respectively.
